# EUROPÄISCHE PATENTSCHRIFT

(11) **EP 3 449 708 B1**
(45) Veröffentlichungstag und Bekanntmachung des Hinweises auf die Patenterteilung: **02.02.2022**
(21) Anmeldenummer: 18401074.2
(22) Anmeldetag: 24.08.2018
(51) Int. Cl.: A01B 21/08, A01B 63/00, A01B 61/04

(54) **BODENBEARBEITUNGSGERÄT**
SOIL CULTIVATION DEVICE
APPAREIL DE TRAVAIL DU SOL

(30) Priorität: 31.08.2017 DE 102017119971
(43) Veröffentlichungstag der Anmeldung: 06.03.2019
(73) Patentinhaber: Amazonen-Werke H. Dreyer SE & Co. KG, 49205 Hasbergen (DE)
(72) Erfinder: Scherf, Silvio, 39444 Hecklingen OT Cochstedt (DE); Köhler, Marcus, 06231 Tollwitz (DE)

(56) Entgegenhaltungen:
- EP-A1- 1 032 253
- EP-A1- 1 529 431
- WO-A1-2004/004437
- US-A1- 2017 079 194

## Beschreibung

Die Erfindung betrifft ein Bodenbearbeitungsgerät gemäß dem Oberbegriff des Patentanspruches 1.

Die WO 2004/004437 A1 offenbart ein derartiges Bodenbearbeitungsgerät

Ein weiteres Bodenbearbeitungsgerät ist in DE 100 66 183 B4 beschrieben. Dieses als Scheibenegge ausgebildete Bodenbearbeitungsgerät weist einen zentralen Rahmen auf. An dem Rahmen ist in Fahrtrichtung nach vorne weisend eine Deichsel zur Anbindung eine landwirtschaftliche Zugmaschine vorgesehen. Die Deichsel erstreckt sich somit in Fahrtrichtung. Quer zur Fahrtrichtung sind zwei Trägerbalken am Rahmen angeordnet. Diese Trägerbalken sind dazu eingerichtet eine Vielzahl von Armen aufzunehmen. Die Arme werden jeweils mit Hilfe einer Gummilagerung an dem Trägerbalken befestigt und an ihrem zum Boden weisenden freien Ende ist jeweils eine drehbar gelagerte Scheibe befestigt. In Fahrtrichtung hinter den Trägerbalken ist eine Nachlaufwalze schwenkbar am Rahmen angeordnet.

Zur Anpassung der auf die Arme bzw. die Trägerbalken wirkenden Arbeitskräfte ist eine Stellvorrichtung zur Variation der relativen Höheneinstellung der an einem der beiden Trägerbalken befestigten Scheibenarme vorgesehen. Diese Stellvorrichtung ist als Einstellspindel ausgebildet und zwischen dem Rahmen und dem in Fahrtrichtung vorderen Trägerbalken angeordnet. Dadurch, dass die Einstellspindel einerseits in ihrer Längsrichtung am Rahmen festgelegt ist und andererseits über einen Stellhebel mit dem Trägerbalken verbunden ist, führt die durch Verdrehen der Spindel hervorgerufene Längenänderung der selbigen zu einer Schwenkbewegung des vorderen Trägerbalkens um seine Längsachse. Um diese Schwenkbewegung auf den in Fahrtrichtung hinteren Trägerbalken zu übertragen ist ein Kopplungselement vorgesehen. Das als Flacheisen ausgebildete Kopplungselement ist zwischen dem ersten und zweiten Trägerbalken auf gleicher Höhe angeordnet und fest mit diesen verbunden. Die Schwenkbewegung des ersten Trägerbalkens überträgt sich somit unmittelbar auf den zweiten Trägerbalken.

Diese Anordnung weist den Nachteil auf, dass die zur Höheneinstellung der Arme vorgesehene Stellvorrichtung mit dem zusammenwirkenden Kopplungselement mehrteilig ausgebildet ist und daher aus separaten Teilen besteht. Dies ist besonders nachteilig, da mehrere Anordnungen an dem Bodenbearbeitungsgerät vorgesehen sind und der Bauteilumfang in entsprechend erhöhter Weise ansteigt.

Ferner ist aus der EP 1 032 253 A1 ein Bodenbearbeitungsgerät bekannt dessen Trägerbalken mittels eines mit einem Hydraulikzylinder und Koppelstangen zusammenwirkenden Seilzugs gekoppelt sind.

Der Erfindung liegt die Aufgabe zu Grunde, eine vereinfachte Anordnung zur Verstellung und Kopplung der Trägerbalken zu schaffen.

Diese Aufgabe wird erfindungsgemäß durch ein Bodenbearbeitungsgerät mit den Merkmalen des Anspruchs 1 gelöst. Es ist vorgesehen, dass das Kopplungselement und das Mittel zur Verschwenkung und/oder Verdrehung der Trägerbalken jeweils zu einem Bauteil zusammengefasst sind, und dass das Bauteil jeweils aus einem, am Rahmen drehbar festgelegten und/oder verschiebbaren Mittelteil und zumindest einem zum Mittelteil oder zum Rahmen in Fahrtrichtung verschiebbar angeordnetem und am ersten und/oder zweiten Trägerbalken befestigten Stellteil besteht.

Infolge dieser Maßnahme wird erreicht, dass das Kopplungselement in das Verstellmittel integriert wird und sich der Umfang der zur Kopplung und Verstellung der Trägerbalken notwendigen Bauteile auf eine Mindestanzahl beschränkt. So werden die bisherigen einzelnen Komponenten der Einstellvorrichtung zu einem einzigen Bauteil zusammengefasst und eine leichtbauende Konstruktion mit direkter Übersetzung der Verstellbewegungen erreicht. Auf einfache Weise werden der vordere und der hintere Trägerbalken verbunden und die axiale Sicherung des Mittelteils verhindert ein ungewolltes Verschwenken und/oder Verdrehen der Trägerbalken.

In einer ersten nicht erfindungsgemäßen Ausführungsform ist das zusammengefasste Bauteil zur Kopplung und Verschwenkung und/oder Verdrehung der Trägerbalken als ein Mittelteil, welches als in Längsrichtung ausgedehnte Spindelmutter ausgebildet ist, in die zwei Stellteile eingreifen, die als gleichsinnig geformte Gewindestangen ausgebildet sind, ausgeführt. Die beiden gleichsinnigen Gewindestangen haben in dieser Ausführungsform jeweils entweder die gleiche oder unterschiedliche Steigung(en). Vorteilhaft ist hierbei, dass die Verstellung der Verschwenkung und/oder Verdrehung der Trägerbalken so quasi stufenlos und synchron mittels eines einzigen Bauteils gestaltet wird. In vorteilhafter Weise kann durch die Abwandlung, die Gewindestangen mit unterschiedlichen Steigungen zu versehen, die Neigungsverstellung der am vorderen Trägerbalken montierten, stärker belasteten Scheibenreihe angepasst werden.

Erfindungsgemäß ist das zusammengefasste Bauteil zur Kopplung und Verschwenkung und/oder Verdrehung der Trägerbalken als ein Mittelteil, welches als Hülse mit Außengewinde im Bereich der Festlegung am Rahmen ausgebildet ist, in der zwei Stellteile drehbar gelagert sind, ausgeführt. Vorteilhaft ist hierbei, dass die Gestaltung der Stellteile weiter vereinfacht ist.

In einer weiteren, nicht erfindungsgemäßen Ausführungsform ist das zusammengefasste Bauteil zur Kopplung und Verschwenkung und/oder Verdrehung der Trägerbalken als Gleichlaufzylinder, dessen Zylinderkörper das Mittelteil bildet und dessen Kolbenstangen jeweils ein Stellteil bilden, ausgeführt. Besonders vorteilhaft ist hierbei, dass sich der Umfang der Bauteile hierbei, ausgenommen der Anbindung an den Rahmen, auf Normteile beschränkt. So wird eine sichere Funktion und ein einfacher Aufbau gewährleistet. Der Gleichlaufzylinder ist in dieser Ausführungsform sowohl als pneumatischer als auch als hydraulischer Zylinder denkbar.

In zweckmäßiger Weiterbildung der Erfindung ist das zusammengefasste Bauteil zur Kopplung und Verschwenkung und/oder Verdrehung der Trägerbalken fernbetrieben. Dadurch wird erreicht, dass die Verstellung für den Benutzer in angenehmer Weise von der Fahrerkabine aus vorgenommen werden kann.

Weitere Einzelheiten der Erfindung sind der Beispielsbeschreibung und den Zeichnungen zu entnehmen. Die Zeichnungen zeigen
- Fig.1: Kurzscheibenegge in perspektivischer Darstellung,
- Fig.2: Kurzscheibenegge in Arbeitsstellung mit unterschiedlichen Arbeitstiefen in nicht erfindungsgemäßer Ausführungsform A in Seitenansicht,
- Fig.3: Schnittansicht des zusammengefassten Bauteils gemäß Fig. 2,
- Fig.4: Detailansicht des zusammengefassten Bauteils gemäß Fig. 3,
- Fig.5: Schnittansicht des zusammengefassten Bauteils in Ausführungsform B,
- Fig.6: Detailansicht des zusammengefassten Bauteils gemäß Fig. 5,
- Fig.7: Schnittansicht des zusammengefassten Bauteils in nicht erfindungsgemäßer Ausführungsform C,
- Fig.8: Detailansicht des zusammengefassten Bauteils gemäß Fig. 7.

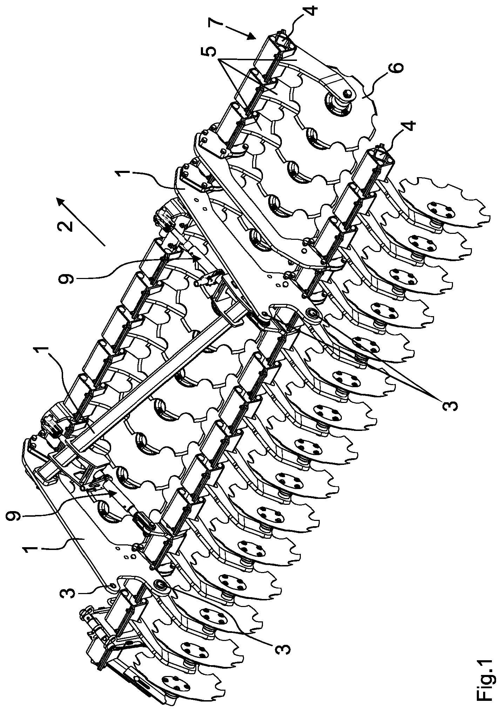

Wie Fig. 1 zeigt, weist die Kurzscheibenegge einen mehrteiligen Rahmen 1 auf. In nicht dargestellter Weise lässt sich der Rahmen 1 mit einer Deichsel oder Dreipunktkupplungsvorrichtung versehen, wobei die Deichsel oder Dreipunktkupplungsvorrichtung dazu dient die Kurzscheibenegge mit einer landwirtschaftlichen Zugmaschine, die ebenfalls nicht dargestellt ist, zu verbinden. So kann die Kurzscheibenegge gezogen werden und bewegt sich hinter der Zugmaschine in Fahrtrichtung 2 fort.

Am hinteren Teil des Rahmens 1 sind Bolzenaufnahmen 3 vorgesehen, um die Kurzscheibenegge mit einer weiteren ebenfalls nicht dargestellten Grubber-Einheit zu verbinden. In Fahrtrichtung 2 vor den Bolzenaufnahmen 3 befinden sich zwei Trägerbalken 4. Die Trägerbalken 4 erstrecken sich quer zur Fahrtrichtung 2 und sind beabstandet hintereinander angeordnet. Jeder der beiden Trägerbalken 4 ist mit einer Vielzahl von Armen 5 versehen, die jeweils mittels einer Gummifederung 7 am Trägerbalken 4 auf gehangen sind. An jedem Arm 5 ist dabei an seinem zum Boden weisenden freien Ende eine drehbar gelagerte Scheibe 6 angeordnet. Die Scheiben 6 greifen je nach eingestellter Neigung N1 - N4 mehr oder weniger tief in den Boden ein und kultivieren diesen möglichst flächendeckend.

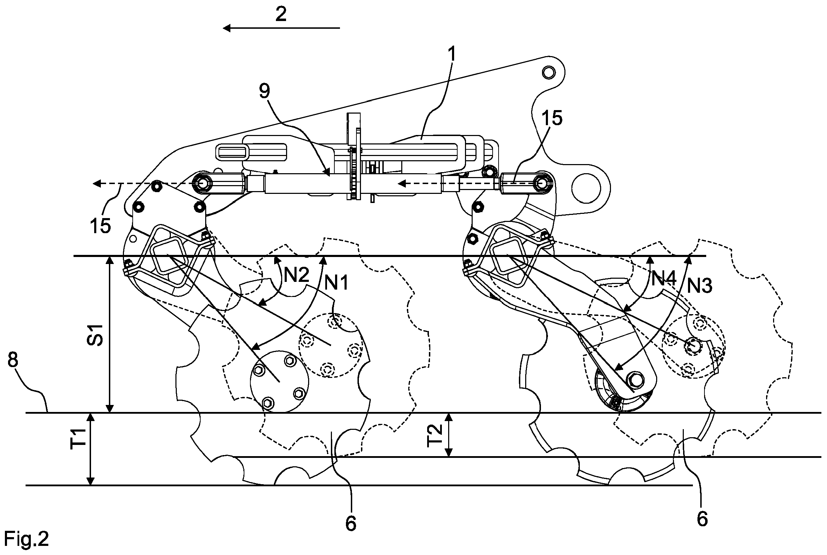

Die Trägerbalken 4 sind bei der vorliegenden Ausführungsform zumindest in begrenzter Weise verschwenkbar bzw. verdrehbar an dem Rahmen 1 einstellbar angeordnet und aneinander gekoppelt. Durch ein Verschwenken der Trägerbalken 4 kann die Neigung N1 - N4 der scheibentragenden Arme 5 eingestellt werden, wie Fig. 2 zeigt. Ein nicht dargestelltes Fahrwerk befindet sich in einem definierten Abstand S1 zur Längsachse der Trägerbalken 4 in Richtung des Erdbodens 8. Im Betrieb rollt die Kurzscheibenegge über das Fahrwerk auf dem Erdboden 8 ab, so dass bei großer Neigung N1, N3 der Arme 5 und zumindest annährend konstantem Abstand S1 die Scheiben 6 in großer Arbeitstiefe T1 arbeiten.

Durch Verschwenken der Trägerbalken 4 kann die Neigung N1, N3 der scheibentragenden Arme 5 zu einer geringeren Neigung N2, N4 verstellt werden, so dass die Scheiben 6 in geringer Arbeitstiefe T2 arbeiten, wie die gestrichelten Linien in Fig. 2 zeigen. Das Verschwenken der Trägerbalken 4 und somit die Einstellung der Neigung N1 - N4 bzw. der Arbeitstiefe T1, T2 wird mit Hilfe des Bauteils 9 vorgenommen, welches der Verstellung der Scheiben 6 und gleichzeitig als Koppelelement zwischen den beiden Trägerbalken 4 dient.

Grundsätzlich besteht das Bauteil 9 aus einem am Rahmen 1 drehbar festgelegten und/oder verschiebbaren Mittelteil 10 und zumindest einem zum Mittelteil 10 oder zum Rahmen 1 in Fahrtrichtung 2 verschiebbar angeordneten und am ersten und/oder zweiten Trägerbalken 4 befestigten Stellteil 12.

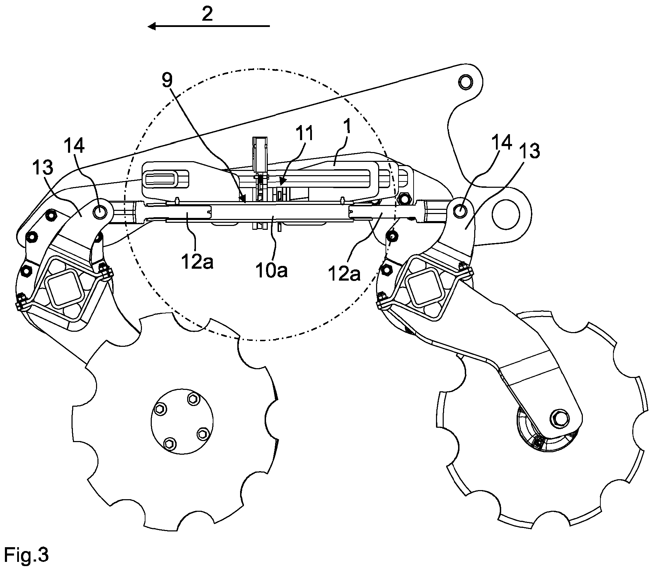

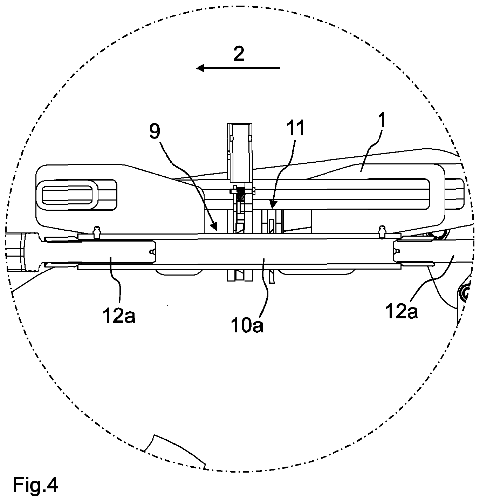

In einer nicht erfindungsgemäßen Ausführungsform A des Bauteils 9, wie Fig. 3, 4 zeigen, wird das Mittelteil 10 des Bauteils 9 gebildet durch eine in Längsrichtung des Bauteils 9 ausgedehnte Spindelmutter 10a. Diese Spindelmutter 10a ist mit einem Innengewinde versehen und mittels einer Halterung 11 in axialer Richtung am Rahmen 1 drehbar festgelegt. In die Spindelmutter 10a greifen in Ausführungsform A zwei Stellteile 12 ein, die als gleichsinnig geformte Gewindestangen 12a ausgebildet sind. Die Gewindestangen 12a sind vorne wie hinten in gleicher Weise mittels Bolzen 14 über einen Stellhebel 13 fest an die Trägerbalken 4 gekoppelt.

Wird in Ausführungsform A die Spindelmutter 10a durch den Benutzer verdreht, so ergibt sich, je nach Drehrichtung, eine axiale Verschiebung der in der der Spindelmutter 10a über gleichsinnige Gewinde eingreifenden Gewindestangen 12a nach vorn oder hinten in Fahrtrichtung 2. Die Spindelmutter 10a ist am Rahmen in axialer Richtung festgelegt und erfährt daher lediglich die Verdrehung und keine Verschiebung. Dieser Vorgang wird durch die gestrichelten Linien und Pfeile 15 in Fig. 2 angedeutet. Aufgrund der zuvor beschriebenen Anordnung der Gewindestangen 12a am Trägerbalken 4 resultiert aus der axialen Verschiebung der Gewindestangen 12a die Schwenkbewegung der Trägerbalken 4 und damit eine Verstellung der Neigung N1 - N4 bzw. der Arbeitstiefe T1, T2. So wird durch das nicht erfindungsgemäße Bauteil 9 ein Mittel zur Verschwenkung und/oder Verdrehung der Trägerbalken 4 und gleichzeitig ein Kopplungselement zwischen den Trägerbalken 4 geschaffen.

Werden die Gewindestangen 12a mit gleichsinnigen Gewinden und gleicher Gewindesteigung versehen, so ergibt sich, dass die Trägerbalken 4 um den gleichen Betrag verdreht werden und so die Neigung N1 immer gleich N3 ist und N2 immer gleich N4 ist. Werden die Gewindestangen 12a mit gleichsinnigen Gewinden und ungleicher Steigung versehen, so ergibt sich, dass das Verhältnis der Neigungen N1, N2, N3, N4 veränderbar ist. So wäre eine nicht dargestellte Ausführungsform denkbar bei der N1 gleich N3 ist und N2 kleiner N4 ist, indem die in Fahrtrichtung 2 vordere Gewindestange 12a mit größerer Steigung als die hintere Gewindestange 12a versehen wird. Durch eine Verdrehung der Spindelmutter 10a erfährt die vordere Gewindestange 12a mit großer Steigung so eine größere axiale Verschiebung als die hintere Gewindestange 12a mit kleiner Steigung.

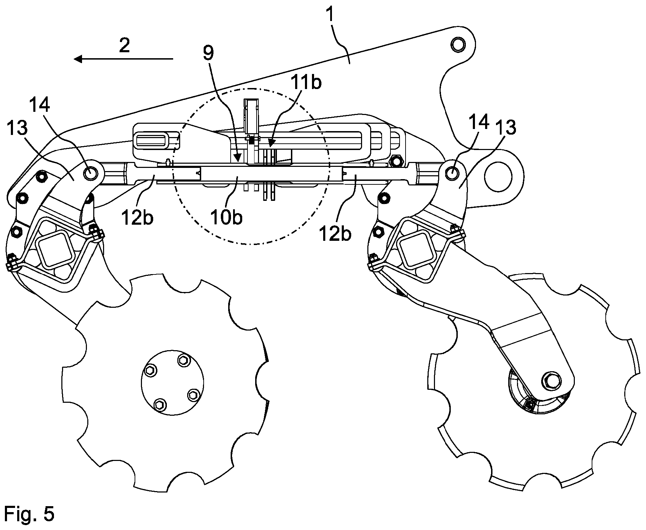

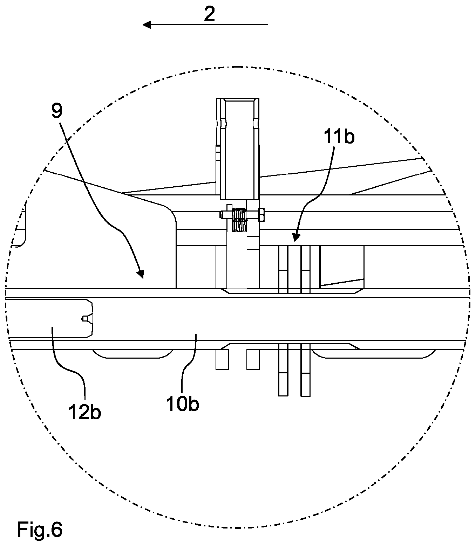

In erfindungsgemäßer Ausführungsform B, wie sie Fig. 5, 6 zeigen, wird das Mittelteil 10 des Bauteils 9 gebildet durch eine Hülse 10b, die mit einem Außengewinde im Bereich der Festlegung am Rahmen 1 versehen ist. In dieser Ausgestaltung entfällt die axiale Sicherung des Mittelteils 10 am Rahmen 1, so dass die Hülse 10b durch ihr Gewinde in Position gehalten wird bzw. verschiebbar ist. Die Halterung 11 ist in dieser Ausführungsform B als zu der Hülse 10b korrespondierende Gewindehalterung 11b ausgeführt. Die Stellteile 12 sind auf gleiche Weise wie in Ausführungsform A an den Trägerbalken 4 befestigt und als Verbindungsstücke 12b ausgeführt. Die Verbindungsstücke 12b sind in der Hülse 10b drehbar und in axialer Richtung fest angeordnet.

Durch Verdrehen der Hülse 10b ergibt sich eine axiale Verschiebung derselben gegenüber der Gewindehalterung 11b. Dadurch, dass die Gewindehalterung 11b am Rahmen 1 festgelegt ist und die Verbindungsstücke 12b die Hülse 10b und die Trägerbalken 4 in axialer Richtung fest koppeln, resultiert eine analoge Verstellung der Neigung N1 - N4 aufgrund der Verschwenkung der Trägerbalken 4, wie in Ausführungsform A.

Um die Bedienung der zuvor beschriebenen Vorrichtung zu erleichtern, ist es denkbar, dass die jeweiligen Ausführungsformen A und B mit nicht dargestellten Aktoren versehen sind, die zur Fernverstellung des zusammengefassten Bauteils 9 zur Kopplung und Verschwenkung und/oder Verdrehung der Trägerbalken 4 geeignet sind. Insbesondere sind die Aktoren so eingerichtet, dass sie von der Fahrerkabine der nicht dargestellten landwirtschaftlichen Zugmaschine aus fernbetrieben werden können.

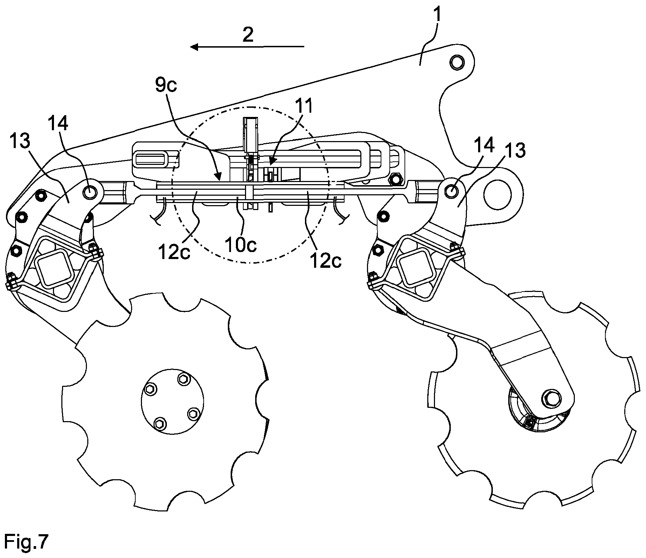

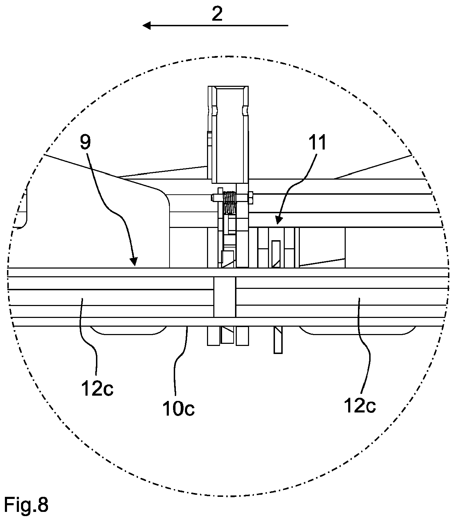

Eine weitere, nicht erfindungsgemäße Ausführungsform C zeigen Fig. 7, 8. Das zusammengefasste Bauteil 9 zur Kopplung und Verschwenkung und/oder Verdrehung der Trägerbalken 4 ist als hydraulischer oder pneumatischer Gleichlaufzylinder 9c ausgebildet. Das Mittelteil 10 wird gebildet durch den Zylinderkörper 10c. Dieser ist über die Halterung 11 in axialer Richtung am Rahmen 1 festgelegt. Die beiden Stellmittel 12 werden gebildet durch die Kolbenstangen 12c des Gleichlaufzylinders 9c. Die Kolbenstangen 12c sind jeweils, wie von Ausführungsform A bekannt, mittels Bolzen 14 über die jeweiligen Stellhebel 13 mit den Trägerbalken 4 gekoppelt.

In technisch üblicher Weise können die Kolbenstangen 12c in axialer Richtung in dem Zylinderkörper 10c verfahren werden. Dadurch, dass der Zylinderkörper 10c mit Hilfe der Halterung 11 am Rahmen 1 in axialer Richtung festgelegt ist und die Kolbenstangen 12c durch die zuvor beschriebene Anordnung mit den Trägerbalken 4 gekoppelt sind ergibt sich so aus dem Verfahrweg der Kolbenstangen 12c die zur Verstellung der Neigung N1 - N4 notwendige Schwenkbewegung der Trägerbalken 4. Zur Erfüllung der so gearteten Funktion eignen sich sowohl Hydraulikzylinder als auch Pneumatikzylinder. Diese werden über die in Fig. 7 angedeuteten Schläuche an die Hydraulik- bzw. Pneumatikanlage der landwirtschaftlichen Zugmaschine angeschlossen und können so über die Bedienung der Zugmaschine fernbetrieben werden.

### Bezugszeichenliste

- 1: Rahmen
- 2: Fahrtrichtung
- 3: Bolzenaufnahmen
- 4: Trägerbalken
- 5: Arm
- 6: Scheibe
- 7: Gummifederung
- N1 - N4: Neigung
- 8: Erdboden
- S1: Abstand
- T1, T2: Arbeitstiefe
- 9: Bauteil
- 9c: Gleichlaufzylinder
- 10: Mittelteil
- 10a: Spindelmutter
- 10b: Hülse
- 10c: Zylinderkörper
- 11: Halterung
- 11b: Gewindehalter
- 12: Stellteil
- 12a: Gewindestange
- 12b: Verbindungsstück
- 12c: Kolbenstange
- 13: Stellhebel
- 14: Bolzen

## Patentansprüche

1. Bodenbearbeitungsgerät, insbesondere Kurzscheibenegge und/oder Grubber-Scheibeneggen Kombination zur möglichst flächendeckenden Bodenkultivierung, mit einem ersten und einem zweiten Trägerbalken (4), die an einem Rahmen (1) des Bodenbearbeitungsgeräts befestigt und sich quer zur Fahrtrichtung (2) der Maschine erstrecken und beabstandet hintereinander angeordnet sind, wobei jeder Trägerbalken mit einer Vielzahl von Armen (5) versehen ist, an deren freien und zum Boden weisenden Ende jeweils zumindest eine drehbare gelagerte Scheibe (6) angeordnet ist, jeder Arm vorzugsweise über eine Gummifederung an dem ersten oder dem zweiten Trägerbalken aufgehängt ist, wobei der erste und der zweite Trägerbalken jeweils um seine Längsachse zumindest in begrenzter Weise verschwenkbar und/oder verdrehbar ist, wobei die Verschwenkung und/oder Verdrehung des ersten und zweiten Trägerbalkens durch zur Verstellung geeignete Mittel einstellbar ist und zwischen dem ersten und zweiten Trägerbalken zumindest ein Kopplungselement angeordnet ist, wobei das Kopplungselement und das Mittel zur Verschwenkung und/oder Verdrehung der Trägerbalken (4) zu einem Bauteil (9) des Bodenbearbeitungsgeräts zusammengefasst sind wobei das Bauteil (9) jeweils aus einem, am Rahmen (1) drehbar festgelegten und/oder verschiebbaren Mittelteil (10) und zumindest einem zum Rahmen (1) in Fahrtrichtung (2) verschiebbar angeordnetem und am ersten und/oder zweiten Trägerbalken (4) befestigten Stellteil (12) besteht, **dadurch gekennzeichnet, dass** das zusammengefasste Bauteil (9) zur Kopplung und Verschwenkung und/oder Verdrehung der Trägerbalken (4) als Mittelteil (10), welches als Hülse (10b) mit Außengewinde im Bereich der Festlegung am Rahmen (1) ausgebildet ist, in der zwei Stellteile (12) drehbar gelagert sind, ausgeführt ist.

2. Bodenbearbeitungsgerät nach Anspruch 1, **dadurch gekennzeichnet, dass** das zusammengefasste Bauteil (9) zur Kopplung und Verschwenkung und/oder Verdrehung der Trägerbalken (4) fernbetrieben werden kann.

## Claims

1. Soil cultivation device, in particular a compact disk harrow and/or a cultivator-disc-harrow combination for the most extensive soil cultivation possible, having a first and a second support beam (4), which are attached to a frame (1) of the soil cultivation device and extend transversely to the direction of travel (2) of the machine and are arranged in series at a distance from one another, wherein each support beam is provided with a plurality of arms (5), on the free, ground-facing end of which in each case at least one rotatably mounted disk (6) is arranged, each arm preferably being suspended from the first or the second support beam by means of a rubber suspension, wherein the first and the second support beams are each pivotable and/or rotatable about their longitudinal axis at least in a limited manner, wherein the pivoting and/or rotation of the first and second support beams can be adjusted by means suitable for adjusting, and at least one coupling element is arranged between the first and second support beams, wherein the coupling element and the means for pivoting and/or rotating the support beams (4) are combined to form a component (9) of the soil cultivation device, wherein the component (9) in each case consists of one central part (10) rotatably fixed and or displaceable on the frame (1) and at least one control part (12) arranged displaceably in the direction of travel (2) with respect to the frame (1) and attached to the first and/or second support beam (4), **characterized in that** the combined component (9) for coupling and pivoting and/or rotating the support beams (4) is designed as a central part (10) in the form of a sleeve (10b) which has an external thread in the region of the fixing on the frame (1) and in which two control parts (12) are rotatably mounted.

2. Soil cultivation device according to claim 1, **characterized in that** the combined component (9) for coupling and pivoting and/or rotating the support beams (4) can be operated remotely.

## Revendications

1. Appareil de travail du sol, en particulier déchaumeuse à disques courts et/ou combinaison cultivateur-déchaumeuse à disques pour la culture la plus extensive possible du sol, présentant une première et une seconde poutre support (4), qui sont fixées au niveau d'un cadre (1) de l'appareil de travail du sol et qui s'étendent transversalement par rapport au sens de déplacement (2) de la machine et qui sont disposées à une certaine distance l'une derrière l'autre, chaque poutre support étant pourvue d'une multitude de bras (5) présentant, au niveau de leur extrémité libre et orientée vers le sol, à chaque fois au moins un disque (6) logé de manière rotative, chaque bras étant suspendu, de préférence par l'intermédiaire d'une suspension en caoutchouc, à la première ou à la seconde poutre support, la première et la seconde poutre support pouvant pivoter et/ou tourner au moins de manière limitée autour de leur axe de rotation respectif, le pivotement et/ou la rotation de la première et de la seconde poutre support pouvant être réglés par réglage de moyens appropriés et au moins un élément d'accouplement étant agencé entre la première et la seconde poutre support, l'élément d'accouplement et les moyens pour le pivotement et/ou la rotation des poutres support (4) étant regroupés en une pièce (9) de l'appareil de travail du sol, la pièce (9) étant à chaque fois constituée par une partie centrale (10) fixée de manière rotative au cadre (1) et/ou mobile et par au moins une partie de réglage (12) agencée sur le cadre (1) de manière mobile dans le sens de déplacement (2) et fixée à la première et/ou à la seconde poutre support (4), **caractérisé en ce que** la pièce regroupée (9) pour l'accouplement et le pivotement et/ou la rotation des poutres support (4) est réalisée en tant que pièce centrale (10), qui est conçue sous forme de manchon (10b) présentant un filetage externe dans la zone de la fixation au cadre (1), dans lequel deux pièces de réglage (12) sont logées de manière rotative.

2. Appareil de travail du sol selon la revendication 1, **caractérisé en ce que** la pièce regroupée (9) pour l'accouplement et le pivotement et/ou la rotation des poutres support (4) peut être commandée à distance.
